# EUROPEAN PATENT APPLICATION

(11) **EP 2 395 249 A1**
(43) Date of publication of application: **14.12.2011**
(21) Application number: 11168614.3
(22) Date of filing: 02.06.2011
(51) Int. Cl.: F16B 5/02, F16B 31/06, F16B 37/08

(54) **Segmented thread and connecting arrangement**

(30) Priority: 10.06.2010 US 797851
(71) Applicant: General Electric Company, Schenectady, NY 12345 (US)
(72) Inventor: Heide, Denis, 48157 Munster (DE)
(74) Representative: Bedford, Grant Richard

(57) **Abstract**

A connecting arrangement is provided. The connecting arrangement includes a bolt (120) with at least one end having a fastening portion (121), wherein the fastening portion (121) has a tapered shape; a segmented thread block (130) having a thread on the outer side and being adapted for fitting the fastening portion (121) of the bolt (120) in a locked position; and fastener (140) having a thread on the inner side, wherein the fastener (140) is adapted for being screwed on the segmented thread block.

## Description

The subject-matter disclosed herein relates generally to a segmented thread block and a connecting arrangement for fastening a bolt. More specifically, the subject-matter disclosed herein relates to a connecting arrangement and a connecting system with improved fatigue resistance and a segmented thread block adapted for being used in the connecting arrangement.

Fastening connections use often form closure in order to provide a tight connection between two or more different parts. Such fastening connections can be provided by screws, nails, bolts, rivets or the like. The function of these connections is to ensure a proper halt of the connected parts and to transmit forces that are applied to the connected parts.

Especially screw connections are a common and popular manner to provide a good connection result at a minimum of costs. Therefore, screws are available for almost every connection of technical interest. For instance, flange connections are screwed in order to connect two approximately round components.

Typically, the screws have to provide a good and secure function in order to avoid any damage from separated components. Especially in very large applications, such as for instance wind energy systems, the screw connection has to meet high security demands. The flange connections of wind energy systems are also screwed and the required strength is achieved by using large screws. Due to the construction and the material, which may be exposed to high loads, there is always a remaining risk for these connections. Furthermore, the dimensioning of the screws is in any technical case a compromise between security and costs.

In view of the above, a connecting arrangement, a segmented thread block and a connecting system and a method of fastening a bolt are provided.

According to a first aspect of the present invetnion, a segmented thread block is provided. The segmented thread block includes at least two parts which are adapted for fitting together, wherein the at least two parts being in an open condition can at least be moved together to transfer the segmented thread block in a closed condition; the at least two parts provide a substantially cylindrical outer surface in a closed position; and wherein the at least two parts provide a inner bore in a closed position, the bore having a first section with at least one first diameter and a second section with at least one second diameter.

According to a further aspect, a connecting arrangement is provided. The connecting arrangement includes a bolt with at least one end having a fastening portion, wherein the fastening portion has a tapered shape; a segmented thread block having a thread on the outer side and being adapted for fitting the fastening portion of the bolt in a locked position; and a fastener having a thread on the inner side, wherein the fastener is adapted for being screwed on the segmented thread block.

According to another aspect, a connecting system for a flange is provided. The connecting system includes a bolt with a fastening portion at one end thereof adapted for fitting with a thread segment cotter, wherein the fastening portion has a tapered shape; a segment thread cotter having at least two segments and one holding part adapted for clamping the bolt, wherein each of the segments of the segment thread cotter has a thread on the outer side and a shape on the inner side allowing for fitting with the fastening portion of the bolt in a locked state; and a nut having a thread on the inner side, wherein the nut is adapted for being screwed on the segment thread cotter by fitting with the continuing threads on the outer side of the at least two segments so that a form closure between the segment thread and the fastening portion of the bolt is provided.

Various aspects, advantages and features of the present invention are apparent from the dependent claims, the description and the accompanying drawings, in which:
Fig. 1a shows a perspective view of a segmented thread block according to embodiments described herein;
Fig. 1b shows a perspective view of a segmented thread block according to embodiments described herein;
Fig. 2a shows a top view of the segmented thread block of Fig. 1b in an open condition according to embodiments described herein;
Fig. 2b shows a top view of the segmented thread block of Fig. 1b in an closed condition according to embodiments described herein;
Fig. 2c shows a top view of the segmented thread block of Fig. 1b in an open condition according to other embodiments described herein;
Fig. 2d shows a top view of the segmented thread block of Fig. 1b in an closed condition according to other embodiments described herein;
Fig. 3 shows a schematic, exploded view of a connecting arrangement according to embodiments described herein;
Fig. 4 shows a schematic view of a mounted connecting arrangement before fastening according to embodiments described herein;
Fig. 5 shows a schematic view of a mounted connecting arrangement after fastening according to embodiments described herein; and
Fig. 6 shows a schematic view of a mounted connecting arrangement after fastening according to other embodiments described herein.

Reference will now be made in detail to the various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

The strength of a screw connection depends on different conditions. Among these conditions, there are material, size, sort of assembly, load, location etc. Due to the geometry of the screw, screws allow on the one hand for a tight connection and on the other hand may cause notch stress. The notch stress appears in devices with a notched geometry. Notches with a sharp change in geometry (such as threads and the like) cause stress peaks in a device, when the device is stressed by tension, bending, torsion, and/or shear. These stress peaks reduce the strength of the device and may shorten the life time.

The notch stress may constitute a weak point of a screw-nut connection. With the addition of further factors, such as material weakness, the notch stress may have severe consequences. Therefore, screws have to be dimensioned in an adequate manner and the size of the screws to be used has to be increased for ensuring a proper function. Otherwise, the life cycle of the screws is shortened and the screws may have to be exchanged more often. The exchange of screws may result in high costs, especially because screw connections may be accessible only with considerable effort within a machine.

Threads for instance have sharp notches. Sharp notches cause high fatigue in bolts having threads. Further, sharp notches influence the load transmission through the thread in a negative manner. Consequently, a crack may occur during the lifetime of the bolt having a thread, beginning at the notch in the thread. The crack may progress and may result in total bolt loss.

The connecting arrangement described herein avoids these problems and provides an arrangement capable of reducing the notch stress. Thus, the subject-matter described herein provides a bolt-nut connection with improved fatigue behavior. The bolt-nut connections in the connecting arrangement and the connecting system according to embodiments described herein have a modified geometry, which helps to increase the resistance of the bolt regarding fatigue and may therefore increase the life cycle and the security of the connection compared to a screw connection as known in the art.

The terms "connecting arrangement" and "connecting system" are used synonymously herein.

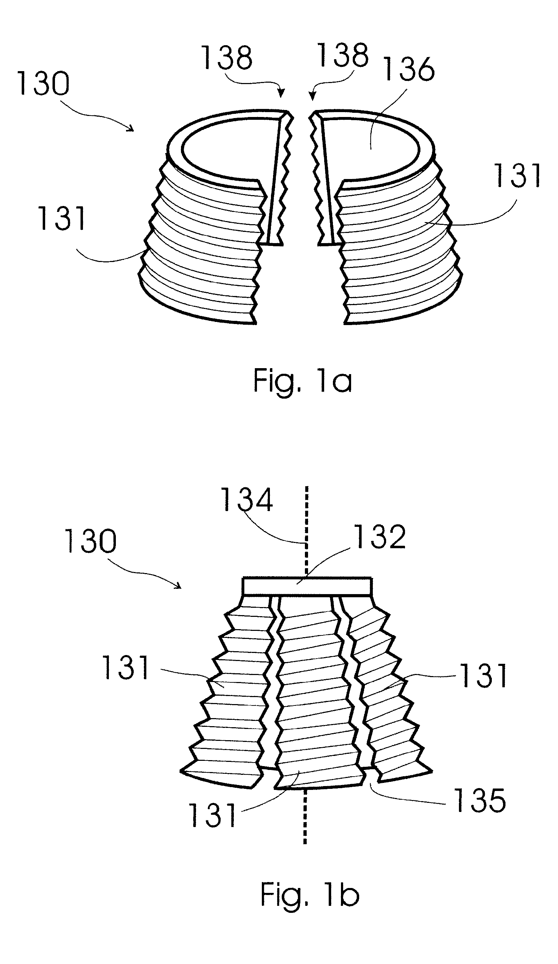

Fig. 1a shows a segmented thread block 130 in an open condition. The segmented thread block 130 includes two parts or thread segments 131, which are flexible to a predetermined degree. The segmented thread block 130 is shown in an open condition in Fig. 1a. When the two thread segments 131 are moved towards each other, they can provide a closed condition. The upper ends 138 of the thread segments fit together in the closed condition and the other end bends so that the two thread segments 131 can build a circumferential thread on the outer side of the thread segment block 130 in the closed condition. Also, a bore 136 is provided in a closed position, wherein the bore 136 on the inner side of the thread segment block 136 has a first section with at a first diameter and a second section with a second diameter.

A segmented thread block 130 is shown in an open condition in Fig. 1b. According to some embodiments, this segmented thread block 130 may be used in a connecting arrangement for improving the fatigue behavior. The segmented thread block 130 has a joint portion 132, which is adapted for holding the different parts, such as segments 131 of the segmented thread block 130. It can be seen that segments 131 extend from the joint portion 132 in Fig.1. Three segments 131 can exemplarily be seen in the perspective view of Fig. 1. The segments 131 are designed so that the surface of the segments 131 provides a thread, when the segmented thread block 130 is in a closed condition, as explained in more detail below. Further, the at least two segments 131 provide a bore 136 of a defined shape on the inner side in the closed condition and wherein the segments 131 are flexible in the radial direction.

Typically, the segments 131 of threaded segment block 130 are placed in a defined distance to each other in an open condition. This distance between the segments 131 provides spaces 135 between the segments 131. The distance may vary along a central axis 134 of segmented thread block 130. For instance, it can be seen in Fig. 1 that the distance between the segments 131 is smaller in the area that is nearer to the holding portion 132 and becomes bigger in a more distant position from the holding portion 132. According to some embodiments, the distance may be constant.

According to some embodiments, which are exemplarily shown in Fig. 1b, the segmented thread block 130 is made from one piece of material and is divided after the inner and the outer sides have the predetermined geometry. Typically, the parts 131 of the segmented thread block 130 are not divided completely so that the parts are still held together by a joint portion 132. The joint portion 132, which may also be denoted as holding portion may have the shape of a circle or a ring, from which the different parts of the segmented thread block 130 originate.

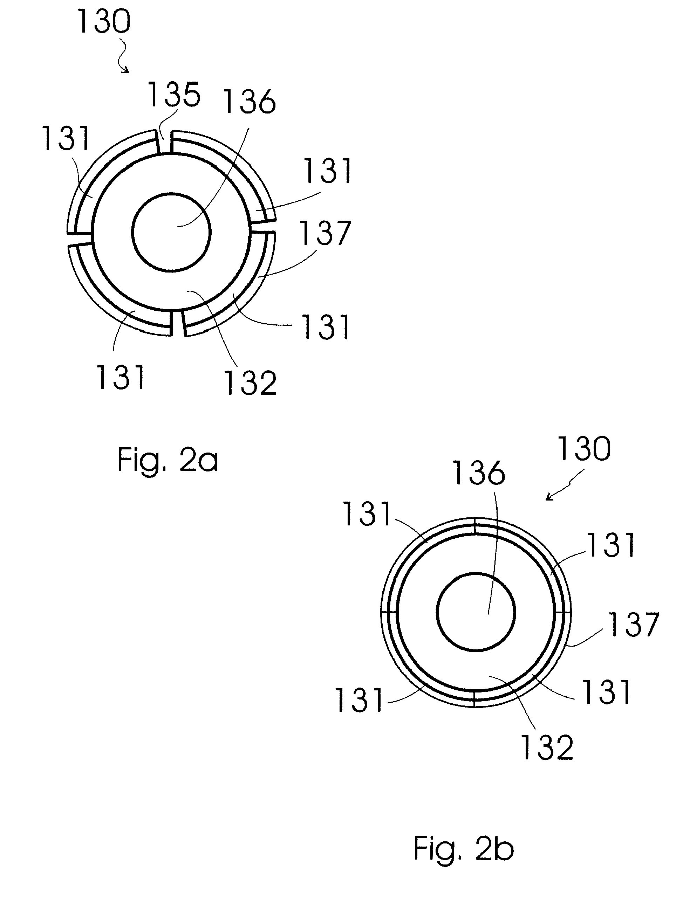

Fig. 2a shows a top view of the segmented thread block 130 of Fig. 1b. The segmented thread block 130 is shown in an open condition that means the spaces 135 are present between the segments 131. In the top view, the thread 137 on the outer side of segments 131 can be seen.

Fig. 2a shows exemplarily four segments 131. The segmented thread block is divided in at least two parts, for instance the thread segment block 130 may have three, four, five, or more than five parts. The thread segment block 130 has six parts and one joint portion 132 in one embodiment. The joint portion 132 is able to hold the parts of the segmented thread block 130 together.

According to some embodiments, the different parts 131 of segmented thread block 130 can be elastically deformed to a certain degree. For instance, the parts 131 may move together in the radial direction in order to provide a continuing thread around the segmented thread block 130 in a closed condition, as can be seen in Fig. 2b. Thus, in comparison to the open condition of Fig. 2a, all spaces 135 are closed between the parts 131 in Fig. 2b, when they are elastically deformed and moved together.

In other words, the segments 131 are flexible to move together in at least the radial direction. Thereby, the outer diameter of a virtual circle surrounding the outer side of segments 131 in an open condition is bigger than in a closed condition. This can also be seen in a comparison between Fig 2a and Fig. 2b.

According to yet other embodiments, parts 131 may be deformed plastically, when they are moved together. A malleable deformation may allow the parts 131 to be bent apart again, after being bent together.

Typically, the parts 131, when moved together either plastically or elastically, provide together a defined, inner geometry. Thereby, the bent parts fill spaces 135, which appear between the parts 131 in an unbent or open position. Due to the geometry of the segmented thread block 130, the inner side of the at least two thread segments 131 is able to provide in a closed position a bore of a defined shape. According to some embodiments, the shape of the inner bore 136 may fit with the shape of a fastening portion of a bolt or the like. Typically, the shape of the inner bore 136 of segmented thread block 130 in a closed condition may be cylindrical or tapered or the like.

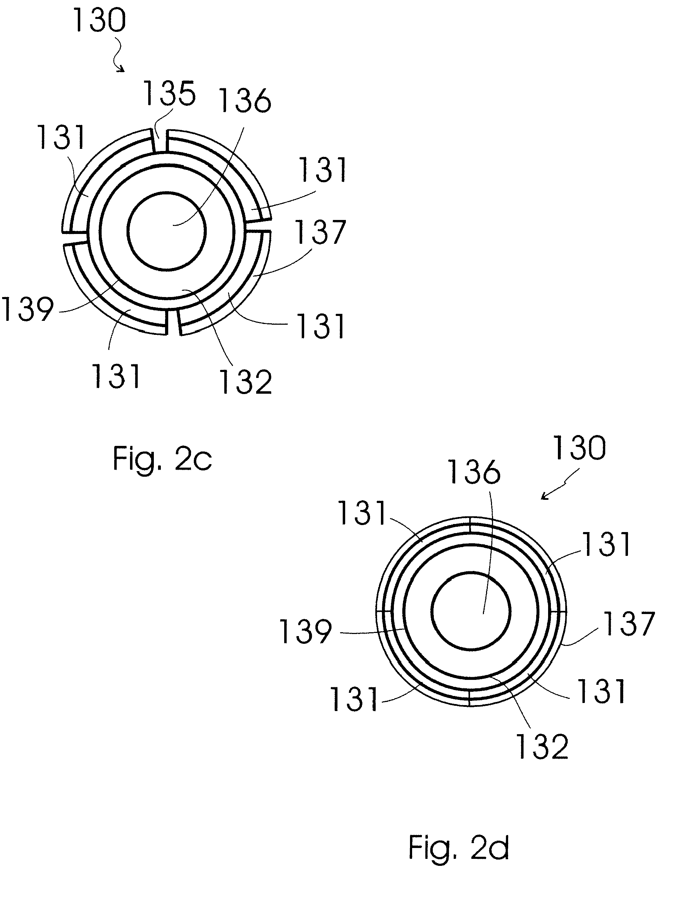

According to some embodiments, which can be combined with other embodiments described herein, the geometry of the bore 136 may have a stepwise change from the first to the second diameter. In Fig. 2c and 2d, it can be seen that there is exemplarily one step 139 between first and second diameter. Typically, there may be more than one step, such as two, three or even more than three steps. The change from the first to the second diameter may be substantially smooth in other embodiments.

According to further embodiments, the holding portion 132 may have a bore 136. Typically, the bore 136 formed by the inner side of the segments 131 in a closed position, continues the bore of the holding portion 132.

According to some embodiments described herein, the segmented thread block may be a segment thread cotter, which is able to clamp a bolt by providing pressure to the fastening portion of a bolt.

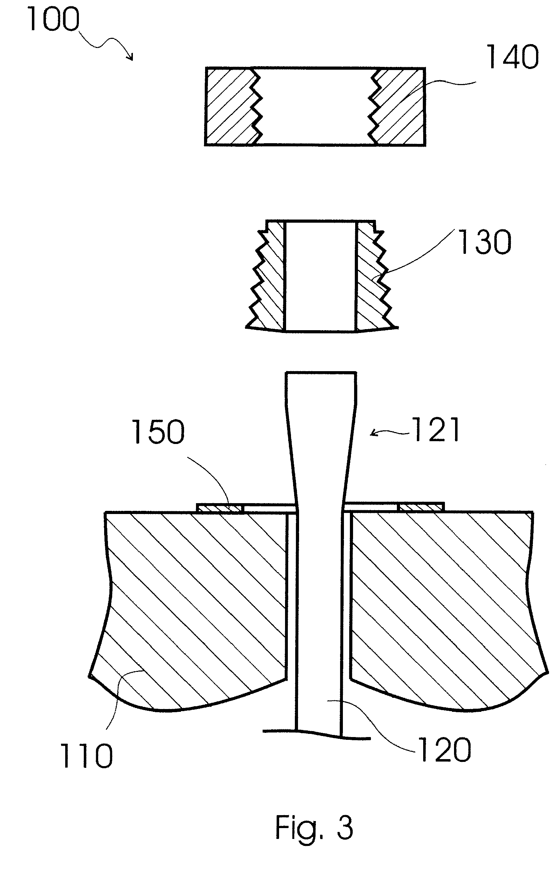

A schematic, exploded view of a connecting arrangement 100 according to embodiments described herein is shown in Fig. 3.. The connecting arrangement 100 includes a bolt 120. The bolt 120 is placed in a device 110, which has to be connected. A device may be a plate, a flange or the like. Typically, the bolt 120 has at least one end having a fastening portion 121.

According to some embodiments, the fastening portion 121 may have certain geometry. Typically, the shape of the fastening portion 121 is inclined or tapered in one direction. Thus, the geometry of the fastening portion 121 and the bolt 120 is designed so that the transmission of load is continuous and approximately constant over the cross section of the bolt 120.

Typically, an improved load transmission can be described as an improvement of the load distribution over the cross section of a device. For instance, a bolt with a fastening portion according to embodiments described herein has an improved load transmission compared to a bolt with a thread on it, because the fastening portion has a defined shape, which prevents stress peaks to appear. An improved load transmission is, for instance, characterized by smooth changes of the stress amount. No sharp corner, peaks or the like appear in the distribution of stress.

The improved load transmission may be provided by a stress-relieved geometry of the fastening portion 121 of bolt 120. The stress-relieved geometry may be described as a smooth geometry, which does not provide abrupt changes in axial direction of the bolt 120. Typically, a smooth geometry provides slight amendments in geometry and a small number of changes in the overall geometry. According to some embodiments, the stress-relieved geometry may be differentiable between at least two portions. The stress-relieved geometry may be substantially continuously differentiable in some embodiments.

A stress-relieved geometry of the fastening portion may reduce the notch stress in a bolt 120. The notch stress of the bolt 120 with stress-relieved geometry may be reduced compared to a bolt having sharp notches and dents or a geometry which is not differentiable between at least two portions.

Further, the connecting arrangement 100 provides a segmented thread block 130. According to some embodiments, the segmented thread block 130 may be the segmented thread block of Fig. 1 and has a thread on the outer side. Typically, the segmented thread block 130 is adapted for fitting the fastening portion 121 of the bolt 120 in a closed condition. The connecting arrangement 100 gets locked by a fastener, as explained in more detail below. Therefore, the segmented thread block 130 is in a closed condition, when the fastener 140 surrounds the segmented thread block 130.

According to some embodiments, the segmented thread block 130 may be a clamp component, which clamps the bolt 120 in a predetermined position.

As can be seen in Fig. 3, a fastener 140 is provided. The fastener 140 has a thread on the inner side, which is adapted for fitting with the thread on the outer side of the segmented thread block 130. Further, the fastener 140 has an inner diameter, which allows the fastener 140 to fasten the segmented thread block 130. For instance, the fastener 140 can fasten the at least two parts of the segmented thread block 130. Further, a washer 150 is provided in Fig. 3.

According to some embodiments, the fastener 140 may be a nut or the like. The nut is adapted for fastening the segmented thread block 130 to the fastening portion 121 of the bolt 120 by pressing the different parts of the segmented thread block 130 to the fastening portion 121 of the bolt 120.

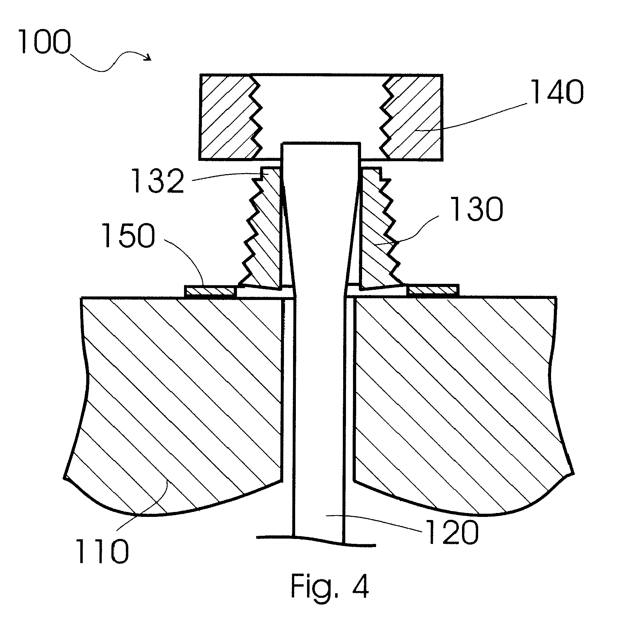

A connecting system 100 according to embodiments described herein is shown in Fig. 4. The connecting system 100 shows the connecting arrangement 100 of Fig. 3 in a partly mounted manner in a sectional view.

The bolt is inserted in a component part 110, which may, for instance, be a flange. The segmented thread block 130 is placed around the bolt so that the beginning of the holding portion 132 overlaps with a straight portion of the bolt 120 at the end of the tapered portion of the fastening portion 121. In Fig. 4, the fastener 140 is placed above the segmented thread block 130 in order to fasten the arrangement.

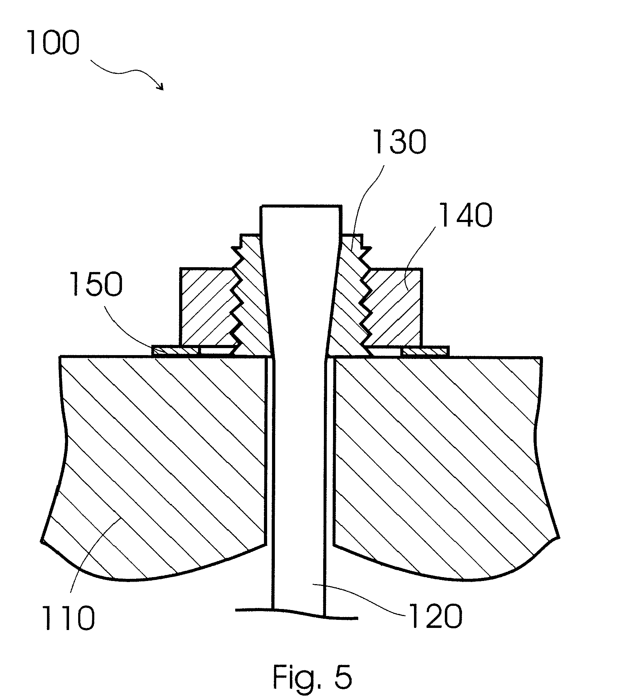

In Fig. 5, a schematic figure shows the mounted and fastened connecting arrangement 100 according to embodiments described herein. The fastener 140 is snugged down over the segmented thread block 130. Thereby, the parts of the segmented thread block 130 are pressed together. By fastening the fastener 140, a form closure is provided between the fastening portion of the bolt 120 and the inner side of the segmented thread block 130. Further, a form closure is provided between the segmented thread block 130 and the fastener 140. A washer 150 is used to distribute the load of the fastener 140.

According to some embodiments, the segmented thread block 130 is held by the friction of a press fit on the bolt. Typically, the press force of the press fit can be adjusted by dimensional tolerances. Therefore, a person skilled in the art will select the dimension of the segmented thread block and the accompanying fastener in order to provide a pretension and a tight halt of the bolt. Further, the person skilled in the art will choose the dimension dependent on the load case, the connection type, the devices to be connected and the like.

According to some embodiments described herein, the connecting arrangement 100 may be provided for a flange 110. Flange connections are used in connecting, for instance, a pipe flange, where two pipes are connected to each other. Another application of a flange connection is the connection of two beams. Typically, the connecting arrangement described herein is adapted for being used in a wind energy system.

According to yet further embodiments, the flange 110 may be part of a wind energy system. For instance, a flange connection may be used in a wind energy system to lock the tower of the wind energy system to the ground.

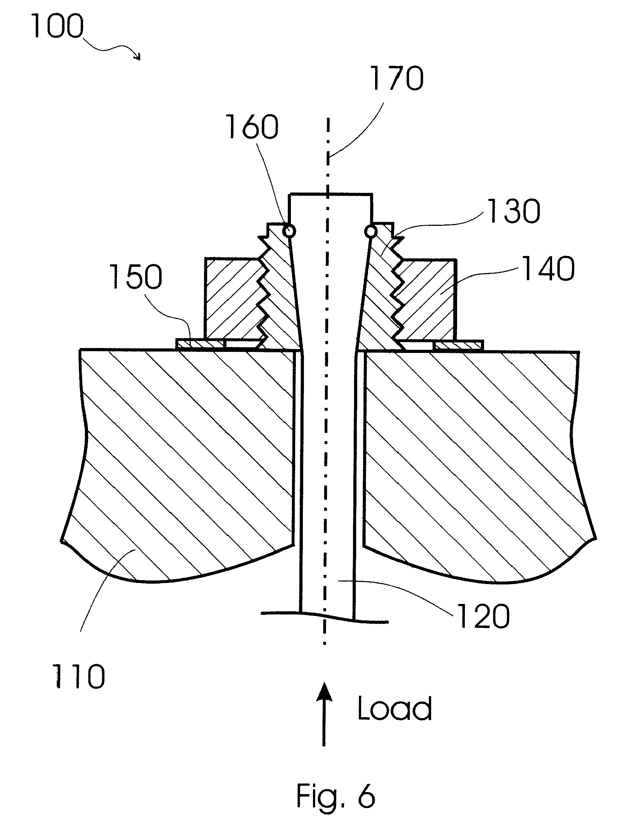

According to some embodiments, the fastening portion of the bolt may be tapered in any direction, dependent on the load case and the application, the connecting arrangement is used in. For instance, if a load is applied as shown in Fig. 6, that means from the bolt 120 in direction to the fastening portion 121 along direction 170, the smaller cross section of the bolt comes first, and the cross section of the bolt increases then in the direction to the end of the bolt 120.

Fig. 6 shows another embodiment of the connecting system. The segmented thread block is held by a holder 160 in this embodiment. According to some embodiments, the holder 160 may, for instance, be a spring, especially a round spring. Typically, the bolt and the segmented thread block in this embodiment are adapted for housing a spring 160.

According to some embodiments, the bolt 120 may have a fastening portion at each end in order to fasten the bolt in each direction. According to yet further embodiments, the second fastening portion at the opposed end of the bolt may also have a tapered portion with a stress-relieved geometry, compared to geometry of a bolt having a thread, grooves or notches.

According to some embodiments, a method for fastening a bolt is provided. The method includes a step for providing two parts to be connected, and inserting a bolt in a bore in these two parts. The bolt has a fastening portion with a tapered portion as described above.

The fastening portion of the bolt is surrounded by a segmented thread, which may, for instance, be a clamp component. According to some embodiments, the segmented thread may have two or more parts or segments, which are held together by a holding portion of the segmented thread. The segmented thread is placed around the bolt. The segmented thread may be the segmented thread block or the segment thread cotter as described above according to any embodiment described herein.

A fastener is provided. The inner side of the fastener fits the segmented thread and which is able to provide a form closure between the outer side of the segmented thread and the fastener. By fastening the fastener, a further form closure is provided between the fastening portion of the bolt and the segmented thread. Thereby, the segments of the segmented thread are pressed together and the inner side of the segmented thread in this locked position is adapted for fitting the shape of the fastening portion of the bolt. Thus, the bolt is fastened and can be held in a predetermined position.

According to some embodiments, the segmented thread may include a holding portion, which surrounds the upper part of the bolt. The upper portion of the bolt is defined by a portion above the fastening portion along a direction of a centre line 170 and having a diameter different from the diameter of the fastening portion. The centre line is exemplarily shown in Fig.6.

By these form closures, the parts to be connected are connected by the bolt. Thereby, the bolt is clamped by the intermediate element and tightened by the fastener. In this manner, the bolt is prevented from moving and can hold the parts to be connected together.

Also, the tensile-shear load combination of a thread as known in the art can be changed into a press-shear load by the connecting arrangement according to embodiments described herein. The connecting system described above allows for increasing the fatigue resistance. Further, the embodiments described above can use known mounting methods for mounting the connecting system. For instance, the connecting system allow for using known tightening methods for fastening the fastener. Moreover, the pre-tensions, which are used to ensure a proper function of the connecting arrangement, may also be calculated by known methods. Therefore, well known mounting or calculation methods can be applied for using the above system and method.

According to some embodiments, the above construction gives the possibility to use different materials for the bolt and the thread. For example, titan can be used instead of steel threads in case of very high loads. Thus, the dimensioning of the connecting arrangement can easily be adapted for every load case.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A segmented thread block, comprising
   at least two thread segments which are adapted for fitting together in a closed condition, wherein
   the at least two thread segments being in an open condition can at least be moved together to transfer the segmented thread block in a closed condition;
   the at least two thread segments provide a substantially cylindrical outer surface in a closed position;
   the outer surface of the at least two segment threads provide a thread in a closed condition; and, wherein
   the at least two thread segments provide an inner bore in a closed position, the bore including a first section including at least one first diameter and a second section including at least one second diameter.
2. The segmented thread block according to clause 1, further comprising a joint portion from which the at least two thread segments extend.
3. The segmented thread block according to any preceding clause, wherein the at least two thread segments are elastically deformable.
4. The segmented thread block according to any preceding clause, wherein at least the at least two thread segments are made from one single material block having a thread on the outer side.
5. The segmented thread block according to any preceding clause, wherein the segmented thread block is adapted for being used in a connecting arrangement for fastening a bolt.
6. A connecting arrangement, comprising:
   a) a bolt with at least one end including a fastening portion, wherein the fastening portion has a tapered shape;
   b) a segmented thread block including a thread on the outer side in a closed condition and being adapted for fitting the fastening portion of the bolt in a closed condition; and,
   c) a fastener including a thread on the inner side, wherein the fastener is adapted for being screwed on the segmented thread block.
7. The connecting arrangement according to any preceding clause, wherein the segmented thread block comprises:
   one or more thread segments adapted to surround the bolt in a closed condition; and,
   a joint portion from which the thread segments extend.
8. The connecting arrangement according to any preceding clause, wherein the fastener is a nut.
9. The connecting arrangement according to any preceding clause, wherein the segmented thread block and the fastening portion of the bolt provide a form closure in a closed condition.
10. The connecting arrangement according to any preceding clause, wherein the inclination of the fastening portion of the bolt is dependent on the load case.
11. The connecting arrangement according to any preceding clause, wherein the connecting arrangement is a connecting arrangement adapted for a flange connection.
12. The connecting arrangement according to any preceding clause, wherein the connection arrangement is adapted for being used in a wind energy system.
13. A connecting system for a flange connection, comprising:
   a) a bolt including a fastening portion at one end thereof adapted for fitting with a thread segment cotter, wherein the fastening portion has a tapered shape;
   b) a segment thread cotter including at least two segments adapted for clamping the bolt, wherein the surface of the at least two segments of the segment thread cotter provides a thread on the outer side in a closed condition and a shape on the inner side allowing for fitting with the fastening portion of the bolt in a locked state; and,
   c) a nut including a thread on the inner side, wherein the nut is adapted for being screwed on the segment thread cotter by fitting with the continuing thread on the outer side of the at least two segments in a closed condition so that a form closure between the segment thread and the fastening portion of the bolt is provided.
14. The connecting system according to any preceding clause, wherein the at least two segments of the segment thread cotter fit together to build one continuing thread, when the nut is applied.
15. The connecting system according to any preceding clause, wherein the segment thread cotter is made from one block and intersected in at least two segments and one holding part, wherein the holding part connects the at least two segments at one end of the segments.
16. The connecting system according to any preceding clause, wherein the connecting system is adapted for fastening a flange connection in a wind energy system.
17. The connecting system according to any preceding clause, wherein the geometry of the one or more notches provides an improved load transmission through the bolt.
18. The connecting system according to any preceding clause, further comprising a holder.
19. The connecting system according to any preceding clause, wherein the holder is a spring.
20. The connecting system according to any preceding clause, wherein segment thread cotter is held by friction of a press fit on the bolt.

## Claims

1. A segmented thread block (130), comprising
at least two thread segments (131) which are adapted for fitting together in a closed condition, wherein
the at least two thread segments being in an open condition can at least be moved together to transfer the segmented thread block in a closed condition;
the at least two thread segments provide a substantially cylindrical outer surface in a closed position;
the outer surface of the at least two segment threads provide a thread (137) in a closed condition; and, wherein
the at least two thread segments provide an inner bore (136) in a closed position, the bore including a first section including at least one first diameter and a second section including at least one second diameter.

2. The segmented thread block (130) according to claim 1, further comprising a joint portion (132) from which the at least two parts extend.

3. The segmented thread block (130) according to any of the preceding claims, wherein the at least two thread segments (131) are elastically deformable.

4. The segmented thread block (130) according to any of the preceding claims, wherein the segmented thread block (130) is adapted for being used in a connecting arrangement for fastening a bolt.

5. A connecting arrangement (100), comprising:
a) a bolt (120) with at least one end having a fastening portion (121), wherein the fastening portion has a tapered shape;
b) a segmented thread block (130) including a thread (137) on the outer side in a closed condition and being adapted for fitting the fastening portion of the bolt in a closed condition; and
c) a fastener (140) including a thread on the inner side, wherein the fastener is adapted for being screwed on the segmented thread block.

6. A connecting arrangement (100) according to claim 5, wherein the segmented thread block (130) is a segmented thread block according to any of claims 1 to 4.

7. A connecting arrangement (100) according to any of claims 5 to 6, wherein the bolt (120) includes a fastening potion at each end.

8. A connecting arrangement (100) according to any of claims 5 to 7, wherein the fastening portion (121) is tapered in any direction.

9. A connecting arrangement (100) according to any of claims 5 to 8, wherein the connecting arrangement is a connecting arrangement adapted for a flange connection.

10. A connecting arrangement (100) according to any of claims 5 to 9, wherein the connection arrangement is used in a wind energy system.
